# EUROPEAN PATENT APPLICATION

(11) **EP 4 484 510 A1**
(43) Date of publication of application: **01.01.2025**
(21) Application number: 23382656.9
(22) Date of filing: 27.06.2023
(51) Int. Cl.: C09G 1/04

(54) **A METHOD AND A COMPOSITION OF POLISHING A TITANIUM OR TITANIUM ALLOY WORKPIECE**

(71) Applicant: Acondicionamiento Tarrasense, 08225 Terrassa (Barcelona) (ES)
(72) Inventor: MESEGUER GUALLAR, Antoni, 08225 TERRASSA (Barcelona) (ES); CALVET MOLINAS, Martí, 08225 TERRASSA (Barcelona) (ES); DOMENECH CASTELLS, Anna, 08225 TERRASSA (Barcelona) (ES); VILARÓ BATLLE, Sergi, 08225 TERRASSA (Barcelona) (ES); BAUTISTA PEREZ, Lorenzo, 08225 TERRASSA (Barcelona) (ES); AMANTIA, David, 08225 TERRASSA (Barcelona) (ES); AUBOUY, Laurent, 08225 TERRASSA (Barcelona) (ES)
(74) Representative: Herrero & Asociados, S.L.

(57) **Abstract**

The present invention relates to a method of polishing a titanium or titanium alloy workpiece and the composition for the polishing. The method and composition of the invention are especially useful in titanium or titanium alloy with complex structures such as those produced by metal additive fabrication.

## Description

The present invention relates to a method of polishing a titanium or titanium alloy workpiece and the composition for the polishing.

The method and composition of the invention are especially useful in titanium or titanium alloy with complex structures such as those produced by metal additive fabrication.

### Background of the invention

Titanium is broadly used in the biomedical, aerospace, and automobile industries. The good strength, biocompatibility, and corrosion resistance made this metal adequate for its use in these industries.

The titanium pieces can show irregular shapes and complex geometry, which are difficult to produce using conventional methods. Additive manufacturing allows the development of complex pieces; it also allows the design of organic geometries and parts with internal passages and surfaces that could not be produced via casting and other conventional fabricating techniques since the components are built in layers.

Titanium polishing is an important aspect of titanium part surface finishes that includes several techniques. It majorly removes material from the titanium part's surface to smoothen it. The polishing improves the appearance of the product, the electrical conductivity, the corrosion resistance, and the durability.

Some polishing methods for titanium pieces are known. For example, the international publication number WO98/41671 defines an aqueous slurry that is useful for the chemical-mechanical polishing of substrates containing titanium comprising: water, submicron abrasive particles, an oxidizing agent, and a combination of complexing agents comprising a phthalate compound and a compound which is a di- or tricarboxylic acid with at least one hydroxyl group in an alpha position relative to one of the carboxyl groups. This chemical-mechanical polishing is not good enough for polishing complex structures made by additive manufacturing because the complexity of the piece impedes the use of mechanical polishing.

As far as the state of the art is concerned, it is necessary to develop a procedure for finishing titanium workpieces with complex structures that reduce the roughness of both the external and internal surfaces of the workpieces.

### Description of the invention

The present invention relates to a method of polishing a titanium or titanium alloy workpiece and the composition for the polishing.

When the workpieces show complex shapes makes the step of polishing is complicated and difficult since the surfaces to be polished are not easily accessible and have a surface roughness.

Polishing the titanium metal part improves intrinsic properties such as biocompatibility, strength, corrosion resistance, and high-temperature resistance. Titanium polishing is a step to avoid mistakes and undesirable results in the performance of the workpiece. Unfortunately, conventional post-processing loses its effectiveness when dealing with complex structures.

The present invention solves the relevant problem of polishing pieces, especially in cavities, ducts, and structures with complex geometries.

The method of polishing the present invention is based on a chemical immersion treatment that reduces roughness by more than 70%.

The present invention relates to a method of polishing a titanium or titanium alloy workpiece comprising the step:
(a) introducing the workpiece into an aqueous solution comprising a fluorine compound in a concentration defined as, fluorine compound weight/total solution weight, between 0.1% to 3%, an oxidant compound, and a complexing agent.

Another aspect of the present invention is a polishing aqueous solution composition characterized by comprising: a fluorine compound in a concentration defined as, fluorine compound weight/total solution weight, between 0.1% to 3%, an oxidant compound, and a complexing agent.

This finishing process is particularly useful for workpieces obtained by additive manufacturing. In this report the term "additive manufacturing" refers to the process of joining materials to create objects from a 3D model, the joining usually occurs layer by layer. Workpieces obtained by additive manufacturing have surfaces that are difficult to access and which are polished by the procedure of the invention.

### Brief description of the drawings

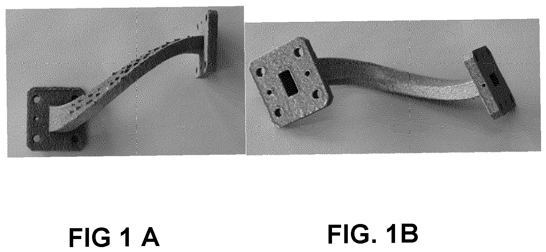

Figure 1 shows a comparative picture on the left showing, FIG 1A an unpolished workpiece, on the right FIG 1B a workpiece polished with the method of the invention as it is shown in Example 4.

### Description of a preferred embodiment

As defined above the first aspect of the invention refers to a method of polishing a titanium or titanium alloy workpiece comprising the steps of:
(a) introducing the workpiece into an aqueous solution comprising a fluorine compound in a concentration defined as, fluorine compound weight/total solution weight, between 0.1% to 3%, an oxidant compound, and a complexing agent.

In the present method of the invention, it is not necessary to use high temperatures and a long time. In a preferred embodiment step, a) is carried out at a temperature between 30°C to 50°C. In another preferred embodiment step, a) is carried out during a time between 30 minutes and 120 minutes.

It is relevant, that the aqueous solution used in the method of the invention touches the entire surface of the workpieces. For this reason, in one embodiment, step a) is carried out under stirring.

Preferably, the method is suitable when the workpiece has been obtained by additive manufacturing, with this technique a workpiece with complicated structures and with internal surfaces can be obtained, these internal structures and surfaces are also polished by the method of the invention. Therefore, in an embodiment of the invention the workpiece is obtained by additive manufacturing.

The Ti6Al4V alloy is the most widely used of the high-strength titanium alloys. The alloy combines its good mechanical strength and low density with excellent corrosion resistance in many media.

Therefore, in another embodiment the titanium alloy is Ti6Al4V.

In the method and/or in the composition of the first and second aspect of the invention the fluorine compound is selected from: ABF (ammonium bifluoride); NaF; TMAF (tetramethylammonium fluoride); AlF₃; hexafluoride acids (hexafluorosilicid acid, hexfluorozirconium acid, hexafluorotitanium acid, etc); B. Preferably the fluorine compound is ammonium bifluoride.

In the method and/or in the composition of the first and second aspect of the invention the oxidant compound is selected from: peroxides, such as hydrogen peroxide, HNO₃; hypochlorite and other hypohalites such as bleaches; diiodo and other halogens; chlorite, chlorate, perchlorate and similar halogen compounds; permanganate salts, such as potassium permanganate (KMnO₄); compounds related to cerium (IV); hexavalent chromium compounds, such as chromic acid, dichromic acid and chromium trioxide, pyridinium chlorochromate (PCC) and chromates/dichromates; sulfoxides; peroxosulfuric acid; ozone; osmium tetroxide (OsO₄); lead dioxide (PbO₂). Preferably the oxidant compound is H₂O₂ and/or HNO₃.

In the method and/or in the composition of the first and second aspect of the invention the complexing agent complexing to facilitate the dissolution in the aqueous solution is selected from: α-hydroxy acids (i.e. lactic acid, citric acid); amino acids (i.e. lysine, serine, asparagine, glycine); mono and dicarboxylic acids (i.e. oxalic acid, succinic acid, sodium heptagluconate; substituted amines i.e. trisodium salt of methylglycinodiacetic acid (MGDA), sodium iminosuccinate; organic acids i.e. ascorbic acid, 1-Hydroxy Ethylidene-1,1-Diphosphonic Acid (HEDP); hyperbranched polymers i.e polyamidoamines. Preferably the complexing agent is lactic acid and/or sodium glucoheptonate.

Preferably the polishing aqueous solution comprises from 5% to 25% of oxidant compound defined as the weight of oxidant compound/ weight of aqueous solution.

Preferably the polishing aqueous solution comprises from 5% to 25% of complexing agent defined as the weight of complexing agent/ weight of aqueous solution.

### EXAMPLES

The following examples are only illustrative of this invention and should not be interpreted as limiting it.

### Examples 1-4

The Examples were based on workpieces obtained by selective laser fusion; the workpieces were made of Ti6Al4V.

In each example, a workpiece was introduced in a polishing composition as described in Table 1.

**Table 1. Polishing composition components and condition of temperature and time.**

| Polishing composition components | Example 1 | Example 2 | Example 3 | Example 4 |
|---|---|---|---|---|
| ABF (%) | 1 | 2 | 1 | 1 |
| Nitric acid (%) | 10 | 10 | 10 | 10 |
| Lactic acid 85% (%) | 5 | 5 | 5 | 5 |
| H₂O₂ 30% (%) | 5 | 5 | 5 | 5 |
| sodium glucoheptonate 30% (%) | 10 | 10 | 10 | 10 |
| Temperature (°C) | 30 | 30 | 30 | 50 |
| Time (hour:minutes) | 00:30 | 00:30 | 01:00 | 01:00 |

**Table 2. Definitions of the measured parameters**

| Parameter | Surface equivalent | Parameter definition |
|---|---|---|
| Rp/µm | Sp/µm | Highest peak |
| Rv/µm | Sv/µm | Deepest valley |
| Rz/µm | Sz/µm | Maximum width of the study area |
| Rc/µm | Sc/µm | Average profile height |
| Rt/µm | St/µm | Total height (for the entire profile = Rz) |
| Ra/µm | Sa/µm | Arithmetic average |
| Rq/µm | Sq/µm | RMS, root mean square |
| Rsk | Ssk | Skewness, asymmetry value. It refers to the distribution of heights |
| Rku | Sku | Kurtosis: It is associated with the geometry of peaks and valleys and is suitable for analyzing the degree of contact between two objects. |

The results are detailed in Table 3.

**Table 3. Results.**

| roughness parameter after applying the procedure of the present invention. | Example 1 | Example 2 | Example 3 | Example 4 |
|---|---|---|---|---|
| Rp/µm | 20,1 | 15,8 | 9,55 | 4,99 |
| Rv/µm | 14,7 | 16,6 | 11,4 | 7,56 |
| Rz/µm | 34,9 | 32,4 | 20,9 | 12,6 |
| Rc/µm | 13,9 | 11,7 | 8,42 | 5,98 |
| Rt/µm | 34,9 | 32,4 | 20,9 | 12,6 |
| Ra/µm | 4,70 | 4,11 | 2,73 | 1,68 |
| Rq/µm | 6,07 | 5,38 | 3,47 | 2,10 |
| Rsk | 0,263 | -0,101 | -0,247 | -0,192 |
| Rku | 3,36 | 3,69 | 3,45 | 3,10 |

The initial data of the workpiece used in Example 4 are shown in Table 4. The data are measured before and after applying the polishing method of the invention.

**Table 4 Initial and final parameters of the workpiece. Example 4**

| Parameter | Initial | Final |
|---|---|---|
| Rp/µm | 53,2 | 4,99 |
| Rv/µm | 35,6 | 7.56 |
| Rz/µm | 88,8 | 12.6 |
| Rc/µm | 36,6 | 5.98 |
| Rt/µm | 88,8 | 12.6 |
| Ra/µm | 12,4 | 1.68 |
| Rq/µm | 15,5 | 2.10 |
| Rsk | 0,406 | -0.192 |
| Rku | 3,07 | 3.10 |
| Sq / µm | 29,9 | 4,08 |
| Ssk | 0,121 | 0,122 |
| Sku | 2,93 | 4,35 |
| Sp / µm | 116 | 39,3 |
| Sv / µm | 98,2 | 26,2 |
| Sz / µm | 214 | 65,5 |
| Sa / µm | 23,8 | 3,19 |

The decrease in roughness is 86% in both Ra and Rz

## Claims

1. A method of polishing a titanium or titanium alloy workpiece comprising the steps of:
(a) introducing the workpiece into an aqueous solution comprising a fluorine compound in a concentration defined as, fluorine compound weight/total solution weight, between 0.1% to 3%, an oxidant compound, and a complexing agent.

2. The method according to claim 1 **characterized by** step a) is carried out at a temperature between 30°C to 50°C.

3. The method according to any of claims 1 to 2 **characterized by** step a) is carried out during a time between 30 minutes and 120 minutes.

4. The method according to any of claims 1 to 4 **characterized by** step a) is carried out under stirring.

5. The method according to any of claims 1 to 4 wherein the fluorine compound is ammonium bifluoride.

6. The method according to any of claims 1 to 5 wherein the oxidant compound is H₂O₂ and/or HNO₃.

7. The method according to any of claims 1 to 6 wherein the complexing agent is lactic acid and/or sodium glucoheptonate.

8. The method according to any of claims 1 to 7 wherein the workpiece is obtained by SLM additive manufacturing.

9. The method according to any of the claims 1 to 8 wherein the titanium alloy is Ti6Al4V.

10. A polishing aqueous solution composition **characterized by** comprising: a fluorine compound in a concentration defined as, fluorine compound weight/total solution weight, between 0.1% to 3%, an oxidant compound, and a complexing agent.

11. The polishing solution according to claim 10 **characterized by** the fluorine compound is ammonium bifluoride.

12. The polishing solution according to any of the claims 10 to 11 **characterized by** the oxidant compound is H₂O₂ and/or HNO₃.

13. The polishing solution according to any of the claims 10 to 12 wherein the complexing agent is lactic acid and/or sodium glucoheptonate.
